(19) Europäisches Patentamt / European Patent Office / Office européen des brevets

(11) **EP 2 594 768 B1**

(12) **FASCICULE DE BREVET EUROPEEN**

(45) Date de publication et mention de la délivrance du brevet:
**11.12.2019 Bulletin 2019/50**

(51) Int Cl.:
*F02D 41/00* *(2006.01)*     *F02D 13/02* *(2006.01)*
*F02D 41/24* *(2006.01)*     *F02D 41/10* *(2006.01)*

(21) Numéro de dépôt: **12290358.6**

(22) Date de dépôt: **18.10.2012**

(54) **Procédé de contrôle de la fraction de gaz brûlés dans un cylindre moteur avec recirculation des gaz brûlés externe et interne**

Verfahren zur Steuerung des Anteils verbrannter Gase in einem Motorzylinder mit externer und interner Abgasrückführung

Method for controlling the burnt gas fraction in an engine cylinder with external and internal exhaust gas recirculation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2011 FR 1103501**

(43) Date de publication de la demande:
**22.05.2013 Bulletin 2013/21**

(73) Titulaire: **IFP Energies nouvelles**
**92500 Rueil-Malmaison (FR)**

(72) Inventeurs:
• **Le Roy, Thomas**
**78100 Saint Germian en Laye (FR)**
• **Chauvin, Jonathan**
**75017 Paris (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 211 043**     **US-A1- 2004 015 287**

• **T. LEROY, G. ALIX, J. CHAUVIN, A. DUPARCHY, F. LE BERR: "Modeling Fresh Air Charge and Residual Gas Fraction on a Dual Independent Variable Valve Timing SI Engine", SAE INT. J. ENGINES, vol. 1, no. 1, 14 avril 2008 (2008-04-14), pages 627-635, XP002682108, DOI: 10.4271/2008-01-0983**

**Description**

La présente invention concerne le domaine du contrôle moteur et plus particulièrement une partie du contrôle du système d'air d'un moteur à essence équipé d'une distribution variable, de type VVT (pour Variable Valve Timing, ou distribution à calage variable) et d'un circuit de recirculation externe des gaz d'échappement basse pression (EGR). La distribution variable est une technologie permettant de faire varier plusieurs paramètres dans un moteur à explosion : notamment le calage, la durée d'ouverture et/ou la levée des soupapes d'admission et d'échappement. Voire par exemple EP 2 211 043.

Sur ce type de moteur, la quantité de gaz brûlés présente dans les cylindres à la fermeture de la soupape d'admission est obtenue de deux façons : par la recirculation interne des gaz brûlés (IGR) via les actionneurs des soupapes d'admission et d'échappement, qui constituent des moyens de distribution variable, dits actionneurs VVT et par la recirculation externe via le circuit EGR.

En effet, la distribution variable permet de réaliser un recyclage interne des gaz brûlés en commandant l'ouverture et la fermeture des soupapes d'admission et d'échappement. On obtient un reflux des gaz d'échappement du canal d'échappement dans le canal d'admission lorsque les soupapes d'admission et d'échappement sont ouvertes simultanément. La durée et l'amplitude de l'ouverture simultanée des soupapes est, dans le cas du recyclage interne des gaz, décisive pour la quantité de gaz recyclés. Dans ce cas, des moyens de distribution variable permettent qu'au moins une soupape d'admission soit alors pilotée de façon à être ouverte avant le point mort haut du piston dans le cylindre, pendant qu'au moins une soupape d'échappement est pilotée de façon à être fermée juste avant ce point mort haut du piston. Les deux soupapes sont alors ouvertes en même temps et les gaz d'échappement sont recyclés. Les avantages du recyclage interne des gaz par rapport au recyclage externe sont la réaction rapide du système et une bonne répartition des gaz recyclés.

Les deux sources de gaz brûlés possèdent des temps de réponses très distincts. En effet, pour piloter l'IGR, on joue sur le déphasage des soupapes ce qui est très rapide. En revanche, piloter l'EGR est très lent car le temps d'écoulement des gaz brûlés dans le circuit de recirculation des gaz d'échappement est long, à cause de la longueur de ce circuit. Il paraît pertinent de piloter la grandeur rapide (IGR via les actionneurs VVT) en transitoire de façon à compenser la lenteur de l'EGR (à travers la vanne EGR), en effet pour les régimes transitoires il est nécessaire d'avoir un temps de réponse rapide.

Un exemple typique de régime transitoire est le levé de pied à forte charge. Au début du transitoire, le taux d'EGR est important, en effet le taux d'EGR est important à forte charge pour repousser la limite du cliquetis. A la fin du transitoire, à charge partielle, ce dernier est nul alors que l'IGR augmente, car L'IGR est important à charge partielle à cause du croisement des soupapes en vue de la diminution des pertes par pompage du moteur. Cependant, durant le transitoire, la quantité d'EGR qui rentre dans les cylindres n'est pas nulle puisqu'il réside des gaz brûlés dans toute la ligne d'admission. Le risque est donc important d'avoir trop de gaz brûlés dans la chambre (EGR plus IGR) et ainsi d'éteindre le moteur. L'objectif, dans ce cas de régime transitoire, est alors de limiter au maximum la quantité d'IGR en attendant que la ligne d'admission soit purgée de ses gaz brûlés.

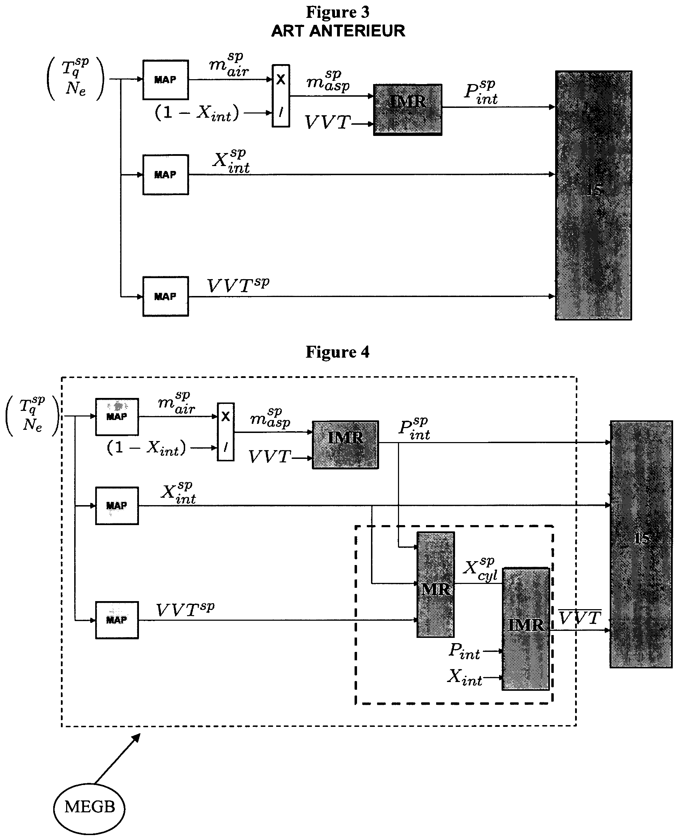

La figure 3 présente le schéma de détermination de consignes pour la boucle d'air (10) d'un moteur à essence avec EGR et IGR selon l'art antérieur. A partir d'une consigne de couple du moteur $T_q^{sp}$ et de la mesure de régime du moteur $N_e$, des cartographies du moteur (MAP) permettent de définir les consignes de masse d'air aspirée $m_{air}^{sp}$, de la fraction de gaz brûlés dans le répartiteur d'admission $X_{int}^{sp}$ ainsi que de positions des actionneurs des soupapes d'admission $VVT_{int}^{sp}$ et d'échappement $VVT_{exh}^{sp}$ du régime stabilisé que l'on cherche à atteindre pour la consigne de couple du moteur $T_q^{sp}$. La masse d'air consigne $m_{air}^{sp}$ est ensuite modifiée en masse aspirée consigne $m_{asp}^{sp}$ en utilisant une valeur de la fraction de gaz brûlés dans le répartiteur d'admission $X_{int}$. Cette fraction de gaz brûlés dans le répartiteur d'admission peut être obtenue par tout moyen notamment par une méthode d'estimation ou une méthode de mesures. A partir de la masse aspirée consigne $m_{asp}^{sp}$ et de la mesure de la position des actionneurs (8 ; 9) des soupapes d'échappement (13) $VVT_{exh}$ et d'admission (12) $VVT_{int}$, un modèle de remplissage (MR) permet de donner une consigne de pression dans le répartiteur d'admission $P_{int}^{sp}$.

Des contrôleurs (15), permettent de piloter la pression d'admission, l'EGR ainsi que les moyens de distribution variable (8 ; 9), pour garantir la consigne de pression $P_{int}^{sp}$, la consigne de fraction de gaz brûlés dans le répartiteur

d'admission $X_{\text{int}}^{sp}$ et les positions des actionneurs des soupapes d'admission $VVT_{\text{int}}^{sp}$ et d'échappement $VVT_{exh}^{sp}$ du régime stabilisé.

Le procédé décrit par la figure 3, ne permet donc pas de contrôler la fraction de gaz brûlés dans le cylindre pendant les régimes transitoires.

Le procédé de commande du moteur selon l'invention permet de piloter la fraction de gaz brûlés dans le cylindre avec une combinaison d'EGR et d'IGR, en optimisant cette fraction de gaz brûlés dans le cylindre lors des régimes transitoires. Le procédé selon l'invention se base sur la commande des actionneurs des soupapes d'admission et des soupapes d'échappement par l'utilisation d'un modèle d'écoulement des gaz brûlés, se basant sur un modèle de remplissage du cylindre. Ce procédé ne nécessite aucune calibration si ce n'est l'utilisation d'un modèle de remplissage du cylindre estimant la masse aspirée dans les cylindres ainsi que la masse de gaz brûlés.

**Le procédé selon l'invention**

L'invention concerne un procédé de commande d'un moteur à combustion interne comprenant au moins un cylindre, au moins une soupape d'admission dans ledit cylindre et au moins une soupape d'échappement des gaz brûlés dudit cylindre, ledit moteur étant équipé d'un circuit de recirculation des gaz d'échappement et de moyens de distribution variable, lesdits moyens de distribution variable étant constitués par un premier actionneur de ladite soupape d'admission et par un second actionneur de ladite soupape d'échappement. Ledit procédé comporte les étapes suivantes :

- on acquiert une consigne du couple dudit moteur $T_q^{sp}$ ;
- on détermine une consigne de position dudit premier actionneur $\overline{VVT}_{\text{int}}$ et une consigne de position dudit second actionneur $\overline{VVT}_{exh}$ en appliquant un modèle d'écoulement des gaz brûlés (MEGB), qui relie les consignes de position desdits actionneurs à la consigne du couple du moteur $T_q^{sp}$, ledit modèle d'écoulement des gaz brûlés (MEGB) comportant un modèle de remplissage du cylindre (MR) ; et
- on contrôle la fraction des gaz brûlés dans ledit cylindre en appliquant les consignes de position $\overline{VVT}_{\text{int}}$ et $\overline{VVT}_{exh}$ auxdits moyens de distribution variable.

Avantageusement, ledit modèle de remplissage (MR) est un modèle statique de remplissage du cylindre estimant la masse d'air aspirée et la masse de gaz brûlés dans le cylindre en fonction du régime $N_e$, température $T_{\text{int}}$ et pression $P_{\text{int}}$ dans le répartiteur d'admission et les positions des actionneurs $VVT_{\text{int}}$ et $VVT_{exh}$.

Selon un mode de réalisation, le modèle d'écoulement des gaz brûlés (MEGB) est construit à l'aide de cartographies (MAP) du moteur en fonction de la consigne de couple $T_q^{sp}$ dudit moteur associées audit modèle de remplissage (MR) dudit cylindre.

Ledit modèle de remplissage (MR) dudit cylindre peut s'écrire :

$$X_{cyl} = \phi\left(P_{\text{int}}, X_{\text{int}}, VVT_{\text{int}}, VVT_{exh}\right)$$

avec

$X_{cyl}$ : fraction massique de gaz brûlés dans le cylindre,
$P_{\text{int}}$ : pression dans un répartiteur d'admission, intégré dans ledit moteur en amont dudit cylindre, dans lequel est prélevé le mélange air et gaz brûlés pour l'admission.
$X_{\text{int}}$ : fraction massique de gaz brûlés dans ledit répartiteur d'admission,
$VVT_{\text{int}}$ : position du premier actionneur, et
$VVT_{exh}$ : position du second actionneur.

De préférence, le modèle de remplissage (MR) est obtenu à partir des équations :

$$\begin{cases} m_{asp}^{\text{int}} = f\left(P_{\text{int}}, VVT_{\text{int}}, VVT_{exh}\right) \\ m_{asp}^{exh} = g\left(P_{\text{int}}, VVT_{\text{int}}, VVT_{exh}\right) \end{cases}$$

dans lesquelles :

$$\begin{cases} f(P_{\text{int}}, VVT_{\text{int}}, VVT_{exh}) = \alpha_1(P_{\text{int}}, N_e)\dfrac{P_{\text{int}}}{RT_{\text{int}}}V_{ivc}(VVT_{\text{int}}) - \alpha_2(P_{\text{int}}, N_e)\dfrac{OF(VVT_{\text{int}}, VVT_{exh})}{N_e} - \alpha_3(P_{\text{int}}, N_e)V_{evc}(VVT_{exh}) \\ g(P_{\text{int}}, VVT_{\text{int}}, VVT_{exh}) = \alpha_2(P_{\text{int}}, N_e)\dfrac{OF(VVT_{\text{int}}, VVT_{exh})}{N_e} + \alpha_3(P_{\text{int}}, N_e)V_{evc}(VVT_{exh}) \end{cases}$$

et de l'équation :

$$X_{cyl} = \frac{X_{\text{int}} m_{asp}^{\text{int}} + m_{asp}^{exh}}{m_{asp}^{\text{int}} + m_{asp}^{exh}}$$

avec

$X_{cyl}$ : fraction massique de gaz brûlés dans le cylindre,

$P_{\text{int}}$ : pression dans le répartiteur d'admission,

$X_{\text{int}}$ : fraction massique de gaz brûlés dans le répartiteur d'admission,

$m_{asp}^{\text{int}}$ : masse aspirée dans les cylindres à travers les soupapes d'admission,

$m_{asp}^{exh}$ : masse aspirée provenant de l'IGR,

$\alpha_1$, $\alpha_2$ et $\alpha_3$ : paramètres de calage du modèle de remplissage connus fonction de $P_{\text{int}}$ et $N_e$,

$V_{ivc}$ : volume du cylindre à l'ivc (fermeture soupape admission), fonction de la position de l'actionneur d'au moins une soupape d'admission $VVT_{\text{int}}$,

$V_{evc}$ : volume du cylindre à l'evc (fermeture soupape échappement), fonction de la position du second actionneur $VVT_{exh}$,

$OF$ : facteur de croisement, fonction des positions des actionneurs des soupapes d'admission et d'échappement, $VVT_{\text{int}}$ et $VVT_{exh}$,

Selon un mode de réalisation, on construit ledit modèle d'écoulement des gaz brûlés (MEGB) en réalisant les étapes suivantes :

a) on détermine des consignes de pression dans le répartiteur d'admission $P_{\text{int}}^{sp}$, de la fraction de gaz brûlés dans le répartiteur d'admission $X_{\text{int}}^{sp}$ et de position des moyens de distribution variable $VVT_{\text{int}}^{sp}$, $VVT_{exh}^{sp}$ souhaité en régime stabilisé en fonction de la consigne de couple du moteur $T_q^{sp}$ ;

b) on détermine une consigne de la fraction de gaz brûlés dans ledit cylindre $X_{cyl}^{sp}$ en appliquant ledit modèle de remplissage (MR) du cylindre à partir de la consigne de pression d'admission $P_{\text{int}}^{sp}$, de la consigne de la fraction de gaz brûlés dans le répartiteur d'admission $X_{\text{int}}^{sp}$ et des consignes de position desdits actionneurs $VVT_{\text{int}}^{sp}$, $VVT_{exh}^{sp}$ du régime stabilisé ; et

c) on détermine les consignes de position desdits actionneurs $\overline{VVT}_{\text{int}}$ et $\overline{VVT}_{exh}$, en inversant ledit modèle de remplissage (IMR) du cylindre à partir de la fraction estimée de gaz brûlés dans le répartiteur d'admission $X_{\text{int}}$, de la consigne de fraction de gaz brûlés dans le cylindre $X_{cyl}^{sp}$, et de la pression estimée dans le répartiteur d'admission $P_{\text{int}}$.

Avantageusement, les consignes de pression dans le répartiteur d'admission $P_{\text{int}}^{sp}$, de la fraction de gaz brûlés dans le répartiteur d'admission $X_{int}^{sp}$ et de position des moyens de distribution variable $VVT_{int}^{sp}$, $VVT_{exh}^{sp}$ souhaité en régime stabilisé sont obtenues en réalisant les étapes suivantes :

i) on détermine une consigne de masse d'air dans ledit cylindre $m_{air}^{sp}$, une consigne de la fraction de gaz brûlés dans le répartiteur d'admission $X_{int}^{sp}$ et des consignes de position desdits actionneurs des soupapes d'admission et d'échappement $VVT_{int}^{sp}$, $VVT_{exh}^{sp}$ souhaité en régime stabilisé à partir de cartographies (MAP) dudit moteur, lesdites cartographies (MAP) étant dépendantes du régime du moteur $N_e$ et de la consigne de couple du moteur $T_q^{sp}$ ;

ii) on détermine une consigne de masse d'air aspirée dans ledit cylindre $m_{asp}^{sp}$, à partir de l'estimation de la fraction de gaz brûlés dans le répartiteur d'admission $X_{int}$ et de la masse d'air dans ledit cylindre $m_{air}^{sp}$ par une méthode d'estimation ou une méthode de mesure de la fraction de gaz brûlés dans ledit répartiteur d'admission ;

iii) on détermine une consigne de pression d'admission $P_{int}^{sp}$ par ledit modèle de remplissage inversé (IMR) du cylindre à partir de la consigne de masse d'air aspirée dans ledit cylindre $m_{asp}^{sp}$ et des positions estimées des actionneurs des soupapes d'admission et d'échappement $VVT_{int}$, $VVT_{exh}$ ;

De préférence, la détermination des consignes de position desdits actionneurs $\overline{VVT}_{int}$ et $\overline{VVT}_{exh}$ sont obtenues en réalisant les étapes suivantes :

i) on fixe la position du second actionneur $VVT_{exh}$ à sa valeur consigne $VVT_{exh}^{sp}$ du régime stabilisé ;

ii) on détermine la consigne de la position du premier actionneur $\overline{VVT}_{int}$ à partir de la consigne de position du second actionneur $VVT_{exh}$ en appliquant ledit modèle de remplissage inversé (IMR) du cylindre :

$$\overline{VVT}_{int} = \Phi\left(X_{cyl}^{sp}, P_{int}, X_{int}, VVT_{exh}^{sp}\right)$$

iii) on détermine la consigne de la position du second actionneur $\overline{VVT}_{exh}$ :

- si la consigne de la position du premier actionneur $\overline{VVT}_{int}$ entre en saturation, on détermine la consigne de la position du second actionneur à partir de la position du premier actionneur $\overline{VVT}_{int}$ en utilisant ledit modèle de remplissage inversé (IMR) du cylindre :

$$\overline{VVT}_{exh} = \Phi\left(X_{cyl}^{sp}, P_{int}, X_{int}, \overline{VVT}_{int}\right) ;$$

- sinon on détermine la position du second actionneur en tant que sa valeur consigne $VVT_{exh}^{sp}$ du régime stabilisé :

$$\overline{VVT}_{exh} = VVT_{exh}^{sp}$$

En outre, l'invention concerne un moteur à combustion interne comprenant au moins un cylindre, au moins une soupape d'admission dans ledit cylindre et au moins une soupape d'échappement de gaz brûlés dudit cylindre, ledit moteur à combustion étant pourvu d'un circuit de recirculation des gaz brûlés et de moyens de distribution variable, lesdits moyens de distribution variable étant constitués par un premier actionneur d'au moins une soupape d'admission et par un second actionneur d'au moins une soupape d'échappement. Ledit moteur comprend des moyens de commande dudit moteur, lesdits moyens de commande étant destinés à appliquer le procédé de commande selon l'invention.

L'invention concerne également un véhicule, notamment automobile, comprenant un moteur à combustion interne tel que décrit ci-dessus.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un exemple de réalisation d'un moteur équipé d'un circuit EGR et d'une distribution variable.

La figure 2 illustre une partie du moteur de la figure 1 et présente des variables environnantes à un cylindre.

La figure 3 représente un schéma de détermination des consignes de la boucle d'air en régime stabilisé, tel qu'utilisé dans l'art antérieur.

La figure 4 représente un schéma de détermination des consignes de la boucle d'air selon l'invention.

La figure 5 illustre une cartographie de consigne de masse d'air.

La figure 6 illustre une cartographie de consigne de la position du premier actionneur (0 : correspond à une avance d'ouverture à l'admission décroisée AOA = -10°, et 40 à AOA = 30 °).

La figure 7 illustre une cartographie de consigne de la position du second actionneur. (0 correspond à un retard de la fermeture d'échappement RFE = -29 °, 40 : RFE = 11 °)

**Description détaillée du procédé**

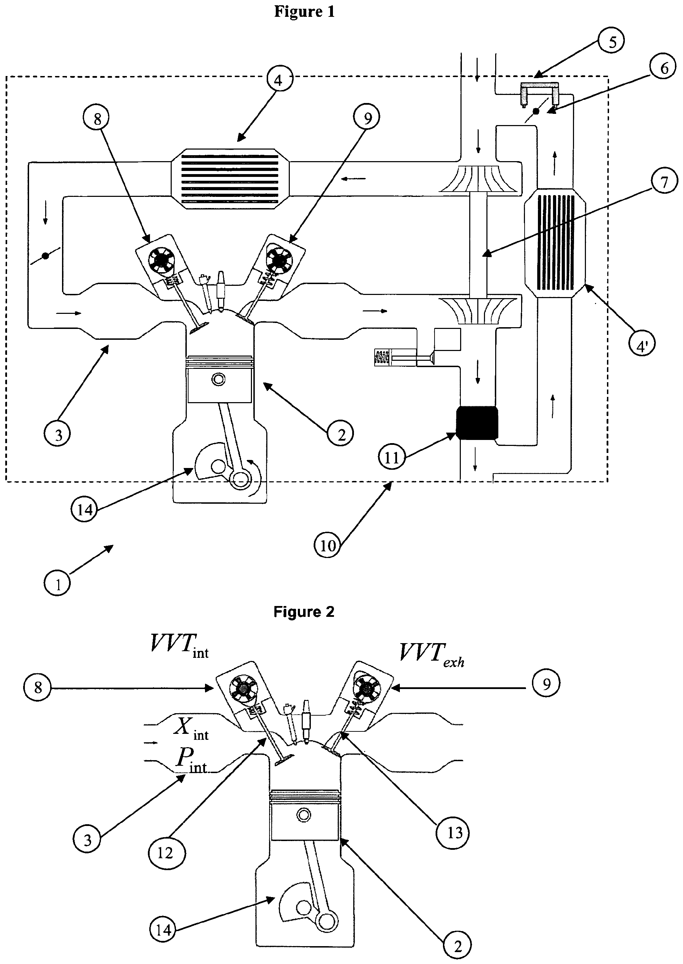

La figure 1 représente un exemple de réalisation d'un moteur à essence (1) équipé d'un circuit de recirculation des gaz brûlés EGR et d'une distribution variable. Pour cet exemple de réalisation, il s'agit d'un circuit EGR basse pression. Au moins un cylindre (2) du moteur à combustion (1) est alimenté en air et gaz brûlés à partir d'un répartiteur d'admission (3). Le circuit d'admission d'air est équipé d'un refroidisseur (4) et d'un compresseur d'un turbocompresseur (7). La ligne d'échappement est composée d'un collecteur d'échappement, d'une turbine du turbocompresseur (7), d'une dérivation, pour injecter une partie des gaz brûlés dans le circuit d'admission d'air. Le circuit de recirculation des gaz brûlés considéré vient prélever des gaz brûlés à l'échappement du moteur en sortie d'un catalyseur (11), situé en aval de la turbine du turbocompresseur (7), pour les réinjecter à l'admission d'un cylindre (2) en amont du compresseur du turbocompresseur (7). Cette partie du circuit est équipée notamment d'un refroidisseur (4') et d'une vanne commandée, dite vanne EGR (6), de plus le moteur, tel que représenté en figure 1, est équipé d'un capteur (5) ici au niveau de la vanne EGR, pour déterminer la quantité de gaz brûlés injectés par le circuit EGR. Il peut s'agir d'un débitmètre ou d'un capteur de pression et il est également équipé d'un dispositif d'injection directe. Ces trois derniers éléments décrits, présents sur l'exemple de moteur de la figure 1, sont usuellement présents sur un moteur "downisizé" (dont on a réduit la cylindrée) mais leur présence n'intervient pas directement dans le procédé selon l'invention.

En outre, ledit moteur est équipé de moyens de distribution variable, constitués par deux actionneurs (représentés partiellement) (8 ; 9) des soupapes d'admission (12) et d'échappement (13). Les actionneurs (8 ; 9) sont aptes à être commandés pour piloter l'ouverture et la fermeture des soupapes d'admission (12) et d'échappement (13), ainsi il est possible de contrôler la fraction de gaz brûlés dans les cylindres. Ils peuvent prendre la forme d'un variateur à palettes couplés à des arbres à cames permettant le déplacement des soupapes.

Le procédé de commande selon l'invention permet de contrôler la fraction des gaz brûlés dans un cylindre (2) d'un moteur (1) à combustion. Il s'appuie sur la commande des actionneurs (8 ; 9) des soupapes d'admission (12) et d'échappement (13). Le procédé selon l'invention comporte les étapes listées ci-dessous :

- on acquiert une consigne du couple dudit moteur $T_q^{sp}$ ;
- on détermine une consigne de position dudit premier actionneur (8) d'au moins une soupape d'admission (12) $\overline{VVT}_{int}$ et une consigne de position dudit second actionneur (9) d'au moins une soupape d'échappement (13) $\overline{VVT}_{exh}$ en appliquant un modèle d'écoulement des gaz brûlés (MEGB), qui relie les consignes de position des actionneurs (8 ; 9) des soupapes d'admission (12) et d'échappement (13) à la consigne du couple du moteur $T_q^{sp}$ ; et
- on contrôle la fraction des gaz brûlés dans ledit cylindre en appliquant les consignes de position $\overline{VVT}_{int}$ et $\overline{VVT}_{exh}$ auxdits moyens de distribution variable.

**Notations**

Au cours de la description, les termes amont et aval sont définis par rapport au sens de l'écoulement des gaz dans la boucle d'air (10). De plus, les notations suivantes seront utilisées :

Paramètres du moteur

$P_{int}$, $T_{int}$ : pression et température dans le répartiteur d'admission (3). Ces deux grandeurs sont mesurées.

$VVT_{adm}$ : position du premier actionneur (8) des soupapes d'admission (12). Elle correspond à un déphasage, en degré, par rapport à une position de référence.

$VVT_{exh}$ : position du second actionneur (9) des soupapes d'échappement (13). Elle correspond à un déphasage, en degré, par rapport à une position de référence.

$T_q$ : couple du moteur.

$N_e$ : régime du moteur (mesuré).

Variables du modèle de la circulation des gaz brûlés

$X_{int}$ : fraction de gaz brûlés dans le répartiteur d'admission (3). Ces gaz brûlés proviennent du circuit de recirculation des gaz d'échappement externe (EGR)
$X_{cyl}$ : fraction de gaz brûlés dans le cylindre. Ces gaz brûlés proviennent du circuit EGR ainsi que de la recirculation interne (IGR) due à la distribution variable.
$m_{asp}^{int}$ : masse aspirée dans les cylindres à travers les soupapes d'admission (12). Cette quantité est composée d'air frais et de gaz brûlés (si la vanne EGR est ouverte).
$m_{asp}^{exh}$ : masse aspirée provenant de l'IGR. Cette quantité n'est composée que de gaz brûlés étant donné le fonctionnement stœchiométrique du moteur.
$m_{air}$ : masse d'air aspirée dans le cylindre, $m_{air} = m_{asp}^{int} + m_{asp}^{exh}$.
$\alpha_1$, $\alpha_2$ et $\alpha_3$ : paramètres de calage du modèle de remplissage connus fonction de $P_{int}$ et $N_e$, ces paramètres sont déterminés expérimentalement au banc moteur.
$V_{ivc}$ : volume du cylindre à l'ivc (fermeture de la soupape d'admission), fonction de la position du premier actionneur (8), $VVT_{int}$.
$V_{evc}$ : volume du cylindre à l'evc (fermeture de la soupape d'échappement), fonction de la position du second actionneur (9), $VVT_{exh}$
$OF$ : facteur de croisement, fonction des positions des actionneurs (8 ; 9) des soupapes d'admission (12) et d'échappement (13), $VVT_{int}$ et $VVT_{exh}$
$A_{int}$ et $A_{exh}$ : aires d'ouvertures des soupapes d'admission (12) et d'échappement (13).
$\theta$ : angle du vilebrequin (14)
$\theta_{ivo}$ : angle du vilebrequin (14) à l'ivo (ouverture de la soupape d'admission (12)), fonction de la position du premier actionneur (8), $VVT_{int}$.
$\theta_{evc}$ : angle du vilebrequin (14) à l'evc (fermeture de la soupape d'échappement (13)), fonction de la position du second actionneur (9), $VVT_{exh}$.
$\theta_{iv} = \theta_{ev}$ : angle du vilebrequin (14) pour lequel les deux soupapes (12 ; 13) ont la même aire d'ouverture.

Constante du modèle d'écoulement des gaz brûlés

$r$ : constante spécifique des gaz parfaits, qui est la même pour tous les gaz concernés ici (air et gaz d'échappement), et qui vaut 288 J/kg/K.
Ces notations, indexées par la mention-$^{sp}$, représentent les consignes associées aux grandeurs considérées. Les consignes de position des actionneurs (8 ; 9) des soupapes d'admission (12) et d'échappement (13) issues du procédé selon l'invention sont notées $\overline{VVT}_{int}$ et $\overline{VVT}_{exh}$, les consignes de position des actionneurs (8 ; 9) des soupapes d'admission (12) et d'échappement (13) notées $VVT_{int}^{sp}$ et $VVT_{exh}^{sp}$ désignent les consignes de position des actionneurs (8 ; 9) à atteindre en régime stabilisé.

En outre, on appelle régime transitoire, un mode de fonctionnement du moteur entre deux régimes stabilisés du moteur. Il s'agit du comportement du moteur lors du passage d'un couple à un autre, par exemple lors d'un levé de pied à forte charge.

Etape 1) Acquisition de la consigne de couple

Le procédé selon l'invention permet le contrôle de la fraction des gaz brûlés dans le cylindre en fonction de la consigne de couple appliquée au moteur thermique. Cette consigne de couple doit être choisie, elle découle directement ou indirectement d'une demande de couple appliquée au moteur thermique. Elle peut résulter du contrôle du moteur, et être fonction de l'enfoncement de la pédale d'accélération du véhicule, cette consigne de couple étant alors l'image de la volonté du conducteur.

Etape 2) Détermination des consignes $VVT_{\text{int}}$ et $VVT_{exh}$

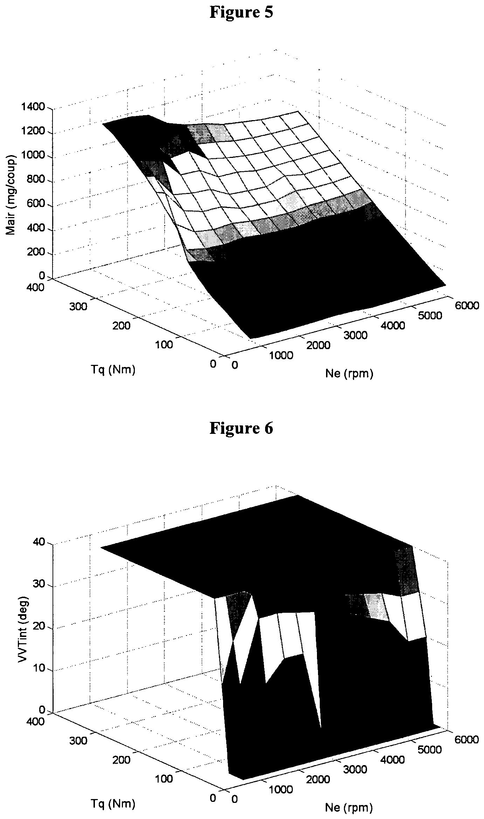

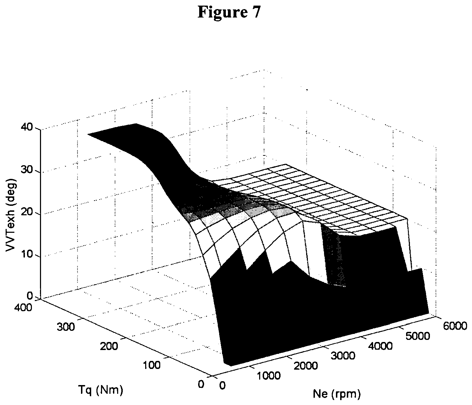

Le procédé selon l'invention se base sur la détermination des consignes de positions des actionneurs de soupapes d'admission et d'échappement $\overline{VVT}_{\text{int}}$ et $\overline{VVT}_{exh}$ pour piloter l'IGR, ce qui permet de contrôler la fraction de gaz brûlés dans le cylindre. Le procédé se base sur l'utilisation d'un modèle d'écoulement des gaz d'échappement (MEGB). On appelle modèle d'écoulement des gaz d'échappement (MEGB), un modèle permettant de caractériser l'écoulement des gaz brûles dans le circuit EGR et par la distribution variable. Ce modèle relie des consignes de position des actionneurs (8 ; 9) de soupapes d'admission (12) et d'échappement (13) à la consigne de couple moteur $T_q^{sp}$. Ce modèle peut dépendre également du couple moteur $N_e$. Il est construit d'une part en réalisant des cartographies (MAP) (figures 5 à 7) du moteur en fonction de la consigne de couple $T_q^{sp}$ dudit moteur et d'autre part avec un modèle de remplissage (MR) dudit cylindre, associé aux cartographies. Ce modèle (MEGB) permet de piloter l'IGR pendant les régimes transitoires.

De préférence, on appelle modèle de remplissage (MR), un modèle statique de remplissage du cylindre estimant la masse d'air aspirée et la masse de gaz brûlés dans le cylindre en fonction du régime $N_e$, température $T_{\text{int}}$ et pression $P_{\text{int}}$ dans le répartiteur d'admission (3) et les positions des actionneurs (8 ; 9) $VVT_{\text{int}}$ et $VVT_{exh}$. Le modèle de remplissage (MR) permet de connaître la fraction de gaz brûlés dans le cylindre et par conséquent de commander l'EGR et l'IGR pour le contrôle des gaz brûlés dans le cylindre en régime transitoire. Un tel modèle est décrit par exemple dans le document : T.Leroy, J.Chauvin, F.Le Berr, A.Duparchy and G.Alix, "Modeling Fresh Air Charge and Residual Gas Fraction on a Dual Independant Variable Valve Timing SI Engine", in Proc. of SAE Conference, 2008-01-0983, 2008).

Soient les masses d'air, $m_{asp}^{\text{int}}$, et de gaz brûlées, $m_{asp}^{exh}$, définies telles que

$$\begin{cases} m_{asp}^{\text{int}} = \alpha_1 \dfrac{P_{\text{int}}}{r T_{\text{int}}} V_{ivc} - m_{asp}^{exh} \\[2mm] m_{asp}^{exh} = \alpha_2 \dfrac{OF}{N_e} + \alpha_3 V_{evc} \end{cases}$$

Le facteur de croisement, $OF$, est déterminé par la relation

$$OF = \int_{\theta_{ivo}}^{\theta_{iv}=\theta_{ev}} A_{\text{int}} d\theta + \int_{\theta_{iv}=\theta_{ev}}^{\theta_{evc}} A_{exh} d\theta$$

On introduit alors les fonctions f et g définies tel que

$$\begin{cases} f(P_{int}, VVT_{int}, VVT_{exh}) = \alpha_1(P_{int}, N_e)\dfrac{P_{int}}{RT_{int}}V_{ivc}(VVT_{int}) - \alpha_2(P_{int}, N_e)\dfrac{OF(VVT_{int}, VVT_{exh})}{N_e} - \alpha_3(P_{int}, N_e)V_{evc}(VVT_{exh}) \\ g(P_{int}, VVT_{int}, VVT_{exh}) = \alpha_2(P_{int}, N_e)\dfrac{OF(VVT_{int}, VVT_{exh})}{N_e} + \alpha_3(P_{int}, N_e)V_{evc}(VVT_{exh}) \end{cases}$$

Par soucis de clarté, on retire le régime et la température d'admission de l'expression. En effet, ces deux valeurs sont mesurées, et leurs influences sont moindres par rapport aux influences des autres membres de l'équation. Il vient les équations suivantes :

$$\begin{cases} m_{asp}^{int} = f(P_{int}, VVT_{int}, VVT_{exh}) \\ m_{asp}^{exh} = g(P_{int}, VVT_{int}, VVT_{exh}) \end{cases}$$

La fraction des gaz brûlés dans le cylindre est égale à la somme des masses de gaz brûlés admises sur la masse totale, soit

$$X_{cyl} = \frac{X_{int}m_{asp}^{int} + m_{asp}^{exh}}{m_{asp}^{int} + m_{asp}^{exh}}$$

où au numérateur on fait la somme de la masse de gaz brûlés provenant de l'admission $X_{int}m_{asp}^{int}$ (égale à zéro lorsqu'il n'y a aucun gaz brûlés en provenance du circuit EGR) et de la masse de gaz brûlés provenant de l'échappement $m_{asp}^{exh}$ (ici, on a uniquement des gaz brûlés étant donné le fonctionnement stœchiométrique). On a donc au final une estimation de la fraction de gaz brûlés dans les cylindres qui s'écrit

$$X_{cyl} = \phi(P_{int}, X_{int}, VVT_{int}, VVT_{exh}) \quad (1)$$

On souhaite piloter la fraction de gaz brûlés dans les cylindres de façon à ce qu'elle soit satisfaite également durant les transitoires. La première étape du procédé de commande selon l'invention est donc la détermination de l'objectif de la fraction de gaz brûlés dans le cylindre pour le régime stabilisé qu'on souhaite atteindre.

La figure 2 illustre un cylindre (2) d'un moteur thermique (1) et son voisinage, en montrant les variables environnantes. $X_{int}$ et $P_{int}$ sont les valeurs de la fraction massique des gaz brûlés et de la pression dans le répartiteur d'admission (3). Une seule soupape d'admission (12) et une seule soupape d'échappement (13) sont représentées, toutefois, de manière connue, chaque cylindre peut être équipé de plusieurs soupapes de chaque sorte. En outre, la position de chaque actionneur (8 ; 9) de soupapes (12; 13) est notée $VVT_{int}$ ou $VVT_{exh}$.

Le procédé selon l'invention, tel qu'illustré à la figure 4, consiste à modifier la consigne de position des actionneurs (8 ; 9) de soupapes d'admission (12) et d'échappement (13) $VVT_{int}^{sp}$ et $VVT_{exh}^{sp}$ du régime stabilisé (obtenu par des cartographies) pour compenser la lenteur de la composition à l'admission. Pour cela, on calcule l'inverse du modèle (IMR) de l'équation (1) pour déterminer la position requise des actionneurs de soupape d'admission et d'échappement (on note ici indifféremment $VVT$ pour les deux actionneurs des soupapes d'admission et d'échappement) :

$$VVT = \Phi(X_{cyl}^{sp}, P_{int}, X_{int}) \quad (2)$$

où $\Phi$ est la fonction inverse de la fonction $\phi$ telle que :

$$x = \phi(P_{int}, X_{int}, \Phi(x, P_{int}, X_{int}))$$

où *x* correspond à une valeur quelconque de fraction de gaz brûlés dans le cylindre. Il est important de noter que l'on utilise dans l'équation (2) l'estimation de la composition admission $X_{\text{int}}$ et non pas la consigne $X^{sp}_{\text{int}}$. Le procédé proposé modifie donc la consigne des actionneurs (8 ; 9) rapides des soupapes d'admission (12) et d'échappement (13) en transitoire $\overline{VVT}_{\text{int}}$ et $\overline{VVT}_{exh}$ par rapport à la figure 3 illustrant l'art antérieur.

Selon un mode préféré de réalisation de l'invention, on construit ledit modèle d'écoulement des gaz brûlés en réalisant les étapes suivantes :

a) on détermine des consignes de pression dans le répartiteur d'admission $P^{sp}_{\text{int}}$, de la fraction de gaz brûlés dans le répartiteur d'admission $X^{sp}_{\text{int}}$ et de position des moyens de distribution variable $VVT^{sp}_{\text{int}}$, $VVT^{sp}_{exh}$ souhaité en régime stabilisé ;

b) on détermine une consigne de la fraction de gaz brûlés dans ledit cylindre $X^{sp}_{cyl}$ en appliquant ledit modèle de remplissage (MR) du cylindre à partir de la consigne de pression d'admission $P^{sp}_{\text{int}}$, de la consigne de la fraction de gaz brûlés dans le répartiteur d'admission (3) $X^{sp}_{\text{int}}$ et des consignes de position desdits actionneurs (8 ; 9) des soupapes d'admission (12) et d'échappement (13) $VVT^{sp}_{\text{int}}$, $VVT^{sp}_{exh}$ souhaité en régime stabilisé ; et

c) on détermine les consignes de position desdits actionneurs (8 ; 9) des soupapes d'admission (12) et d'échappement (13) $\overline{VVT}_{\text{int}}$ et $\overline{VVT}_{exh}$, en utilisant ledit modèle de remplissage inverse (IMR) du cylindre à partir de la fraction estimée de gaz brûlés dans le répartiteur d'admission (3) $X_{\text{int}}$, de la consigne de fraction de gaz brûlés dans le cylindre (2) $X^{sp}_{cyl}$, et de la pression mesurée dans le répartiteur d'admission (3) $P_{\text{int}}$.

Ainsi, les consignes de position desdits actionneurs (8; 9) des soupapes d'admission (12) et d'échappement (13) $\overline{VVT}_{\text{int}}$ et $\overline{VVT}_{exh}$ sont obtenues par application dans un premier temps d'un modèle de remplissage (MR), puis dans un second temps, par l'application de ce modèle de remplissage inversé (IMR). On notera que le modèle de remplissage inversé (IMR) ne dépend pas des valeurs consignes $P^{sp}_{\text{int}}$ et $X^{sp}_{\text{int}}$, mais de valeurs estimées et/ou mesurées de ces valeurs $P_{\text{int}}$ et $X_{\text{int}}$. L'utilisation de ce modèle de remplissage (MR) permet de déterminer la consigne de fraction massique de gaz brûlés dans le cylindre $X^{sp}_{cyl}$, ce qui rend possible un contrôle optimal de l'IGR. En outre, l'association du modèle de remplissage (MR) et de son inverse (IMR) permet une convergence des consignes de position desdits actionneurs (8; 9) des soupapes d'admission (12) et d'échappement (13) $\overline{VVT}_{\text{int}}$ et $\overline{VVT}_{exh}$ vers les consignes de position desdits actionneurs (8 ; 9) des soupapes d'admission (12) et d'échappement (13) $VVT^{sp}_{\text{int}}$, $VVT^{sp}_{exh}$ souhaité en régime stabilisé. A la fin du régime transitoire on obtient donc :

$$\overline{VVT}_{\text{int}} = VVT^{sp}_{\text{int}}$$

$$\overline{VVT}_{exh} = VVT^{sp}_{exh}$$

En effet à la fin du régime transitoire, la pression dans le répartiteur d'admission $P_{\text{int}}$ atteint sa valeur de consigne $P^{sp}_{\text{int}}$, de même que la fraction de gaz brûlés dans le répartiteur d'admission $X_{\text{int}}$ atteint sa valeur consigne $X^{sp}_{\text{int}}$. Le modèle et son inverse ont alors les mêmes valeurs.

De manière classique, la détermination des consignes de pression dans le répartiteur d'admission $P^{sp}_{\text{int}}$, de la fraction de gaz brûlés dans le répartiteur d'admission $X^{sp}_{\text{int}}$ et de position des moyens de distribution variable $VVT^{sp}_{\text{int}}$, $VVT^{sp}_{exh}$ souhaité en régime stabilisé, prévue à l'étape a) décrite ci-dessus est réalisée par les étapes suivantes :

i) on détermine une consigne de masse d'air dans ledit cylindre $m_{air}^{sp}$, une consigne de la fraction de gaz brûlés dans le répartiteur d'admission $X_{int}^{sp}$ et des consignes de position desdits actionneurs des soupapes d'admission et d'échappement $VVT_{int}^{sp}$, $VVT_{exh}^{sp}$ du régime stabilisé à partir de cartographies (MAP) dudit moteur, telles qu'illustrées aux figures 5 à 7, lesdites cartographies (MAP) étant dépendantes du régime du moteur $N_e$ et de la consigne de couple du moteur $T_q^{sp}$ ;

ii) on détermine une consigne de masse d'air aspirée dans ledit cylindre $m_{asp}^{sp}$, à partir de l'estimation de la fraction de gaz brûlés dans le répartiteur d'admission $X_{int}$ et de la masse d'air dans ledit cylindre $m_{air}^{sp}$ par une méthode d'estimation ou par une méthode de mesure de la fraction de gaz brûlés dans ledit répartiteur (3) ;

iii) on détermine une consigne de pression d'admission $P_{int}^{sp}$ par le modèle de remplissage inversé (IMR) du cylindre (2) à partir de la consigne de masse d'air aspirée dans ledit cylindre $m_{asp}^{sp}$ et des positions estimées des actionneurs (8 ; 9) des soupapes d'admission et d'échappement $VVT_{int}$, $VVT_{exh}$.

Avantageusement, la détermination des consignes de position desdits actionneurs (8 ; 9) des soupapes d'admission (12) et d'échappement (13) $\overline{VVT}_{int}$ et $\overline{VVT}_{exh}$ de l'étape c) décrite ci dessus sont obtenues en réalisant les étapes suivantes :

i) on fixe la position du second actionneur (9) $VVT_{exh}$ à sa valeur consigne $VVT_{exh}^{sp}$ du régime stabilisé ;

ii) on détermine la consigne de la position du premier actionneur (8) $\overline{VVT}_{int}$ à partir de la consigne de position du second actionneur (9) $VVT_{exh}$ par un modèle de remplissage inversé (IMR) du cylindre :

$$\overline{VVT}_{int} = \Phi\left(X_{cyl}^{sp}, P_{int}, X_{int}, VVT_{exh}^{sp}\right)$$

iii) on détermine la consigne de la position du second actionneur (9) $\overline{VVT}_{exh}$ :

-   si la consigne de la position du premier actionneur (8) $\overline{VVT}_{int}$ entre en saturation, on détermine cette valeur à partir de la position du premier actionneur (8) $\overline{VVT}_{int}$ par ledit modèle de remplissage inversé (IMR) du cylindre :

$$\overline{VVT}_{exh} = \Phi\left(X_{cyl}^{sp}, P_{int}, X_{int}, \overline{VVT}_{int}\right)$$

-   sinon, on détermine cette valeur en tant que sa valeur consigne $VVT_{exh}^{sp}$ du régime stabilisé :
    $$\overline{VVT}_{exh} = VVT_{exh}^{sp}$$

Dans les étapes i) à iii) décrites ci-dessus, il est possible d'intervertir les grandeurs d'admission et d'échappement : on peut fixer d'abord $VVT_{int}$, puis calculer $\overline{VVT}_{exh}$, et en déduire $\overline{VVT}_{int}$.

La saturation de la consigne de la position du premier actionneur (8) $\overline{VVT}_{int}$ est définie par les contraintes mécaniques liées à l'actionneur : déphasages minimal et maximal admissibles par l'actionneur.

Etape 3) Contrôle de la fraction des gaz brûlés

La fraction des gaz brûlés dans le cylindre $X_{cyl}$ est alors contrôlée par la commande des actionneurs (8 ; 9) des soupapes d'admission (12) et d'échappement (13) à leurs valeurs consignes $\overline{VVT}_{int}$ et $\overline{VVT}_{exh}$. Ainsi, on optimise le taux de gaz brûlés dans le cylindre pour les régimes transitoires, en pilotant l'IGR, dont la réponse est plus rapide, mais également en régime stabilisé. En effet, une fois le régime stabilisé atteint, les consignes de position des actionneurs (8 ; 9) des soupapes d'admission (12) et d'échappement (13) $\overline{VVT}_{int}$ et $\overline{VVT}_{exh}$ tendent vers les valeurs données par les cartographies du moteur (MAP).

Le procédé de commande selon l'invention permet donc :

- de contrôler la composition des gaz dans le cylindre d'un moteur à essence équipé d'un système EGR ainsi que d'une distribution variable de type VVT (Variable Valve Timing) ;
- de prendre en compte l'estimation de la composition des gaz à l'admission de façon à améliorer la réponse en transitoire de fraction de gaz brûlés ;
- d'améliorer la réponse en transitoire de fraction de gaz brûlés. Il s'ensuit une amélioration de l'agrément de conduite. La lenteur de la composition des gaz à l'admission (à cause de la longueur du circuit EGR) est compensée par la modification de la consigne de position des actionneurs de soupapes pour satisfaire la fraction de gaz brûlés demandée.

En outre, l'invention concerne un moteur à combustion interne (1) comprenant au moins un cylindre (2), au moins une soupape (12) d'admission dans ledit cylindre et au moins une soupape (13) d'échappement de gaz brûlés dudit cylindre (2). Ledit moteur à combustion étant pourvu d'un circuit de recirculation des gaz brûlés et des moyens de distribution variable. Lesdits moyens de distribution variable étant constitués par un premier actionneur (8) d'au moins une soupape d'admission (12) et un second actionneur (9) d'au moins une soupape d'échappement (13). Ledit moteur (1) comprend des moyens de commande dudit moteur, lesdits moyens de commande étant aptes et destinés à appliquer le procédé de commande selon l'invention.

## Revendications

1. Procédé de commande d'un moteur à combustion interne (1) comprenant au moins un cylindre (2), au moins une soupape (12) d'admission dans ledit cylindre (2) et au moins une soupape (13) d'échappement des gaz brûlés dudit cylindre (2), ledit moteur étant équipé d'un circuit de recirculation des gaz d'échappement et de moyens de distribution variable, lesdits moyens de distribution variable étant constitués par un premier actionneur (8) de ladite soupape d'admission et par un second actionneur (9) de ladite soupape d'échappement, **caractérisé en ce qu'**il comporte les étapes suivantes :

   - on acquiert une consigne du couple dudit moteur $T_q^{sp}$ ;
   - on détermine une consigne de position dudit premier actionneur (8) $\overline{VVT}_{int}$ et une consigne de position dudit second actionneur (9) $\overline{VVT}_{exh}$ en appliquant un modèle d'écoulement des gaz brûlés (MEGB), qui relie les consignes de position desdits actionneurs à la consigne du couple du moteur $T_q^{sp}$, ledit modèle d'écoulement des gaz brûlés (MEGB) comportant un modèle de remplissage du cylindre (MR) et caractérisant l'écoulement des gaz brûlés dans ledit circuit de recirculation externe des gaz d'échappement (EGR) et interne (IGR) du à la distribution variable (VVT) ; et
   - on contrôle la fraction des gaz brûlés dans ledit cylindre en appliquant les consignes de position $\overline{VVT}_{int}$ et $\overline{VVT}_{exh}$ auxdits moyens de distribution variable (8 ; 9).

2. Procédé selon la revendication 1, dans lequel ledit modèle de remplissage (MR) est un modèle statique de remplissage du cylindre estimant la masse d'air aspirée et la masse de gaz brûlés dans le cylindre en fonction du régime $N_e$, température $T_{int}$ et pression $P_{int}$ dans le répartiteur d'admission (3) et les positions des actionneurs (8 ; 9) $VVT_{int}$ et $VVT_{exh}$.

3. Procédé selon l'une des revendications 1 ou 2, dans lequel le modèle d'écoulement des gaz brûlés (MEGB) est construit à l'aide de cartographies (MAP) du moteur en fonction de la consigne de couple $T_q^{sp}$ dudit moteur (1) associées audit modèle de remplissage (MR) dudit cylindre.

4. Procédé selon l'une des revendications précédentes, dans lequel ledit modèle de remplissage (MR) dudit cylindre s'écrit : $X_{cyl} = \phi(P_{int}, X_{int}, VVT_{int}, VVT_{exh})$ avec

   $X_{cyl}$ : Fraction massique de gaz brûlés dans le cylindre (2),

$P_{int}$ : Pression dans un répartiteur d'admission (3), intégré dans ledit moteur en amont dudit cylindre (2), dans lequel est prélevé le mélange air et gaz brûlés pour l'admission.

$X_{int}$ : Fraction massique de gaz brûlés dans ledit répartiteur d'admission (3),

$VVT_{int}$ : Position du premier actionneur (8), et

$VVT_{exh}$ : Position du second actionneur (9)

**5.** Procédé selon la revendication 4, dans lequel le modèle de remplissage (MR) est obtenu à partir des équations :

$$\begin{cases} m_{asp}^{int} = f(P_{int}, VVT_{int}, VVT_{exh}) \\ m_{asp}^{exh} = g(P_{int}, VVT_{int}, VVT_{exh}) \end{cases}$$

dans lesquelles :

$$\begin{cases} f(P_{int}, VVT_{int}, VVT_{exh}) = \alpha_1(P_{int}, N_e)\dfrac{P_{int}}{RT_{int}}V_{ivc}(VVT_{int}) - \alpha_2(P_{int}, N_e)\dfrac{OF(VVT_{int}, VVT_{exh})}{N_e} - \alpha_3(P_{int}, N_e)V_{evc}(VVT_{exh}) \\ g(P_{int}, VVT_{int}, VVT_{exh}) = \alpha_2(P_{int}, N_e)\dfrac{OF(VVT_{int}, VVT_{exh})}{N_e} + \alpha_3(P_{int}, N_e)V_{evc}(VVT_{exh}) \end{cases}$$

et l'équation

$$X_{cyl} = \frac{X_{int}m_{asp}^{int} + m_{asp}^{exh}}{m_{asp}^{int} + m_{asp}^{exh}}$$

avec

$X_{cyl}$ : Fraction massique de gaz brûlés dans le cylindre (2),

$P_{int}$ : Pression dans le répartiteur d'admission (3),

$X_{int}$ : Fraction massique de gaz brûlés dans le répartiteur d'admission (3),

$m_{asp}^{int}$ : Masse aspirée dans les cylindres à travers les soupapes d'admission (12),

$m_{asp}^{exh}$ : Masse aspirée provenant de l'IGR,

$\alpha_1$, $\alpha_2$ et $\alpha_3$: Paramètres de calage du modèle de remplissage connus fonction de $P_{int}$ et $N_e$,

$V_{ivc}$ : Volume du cylindre à l'ivc (fermeture soupape admission), fonction de la position de l'actionneur (8) d'au moins une soupape d'admission $VVT_{int}$,

$V_{evc}$ : Volume du cylindre à l'evc (fermeture soupape échappement), fonction de la position du second actionneur (9) $VVT_{exh}$,

$OF$ : Facteur de croisement, fonction des positions des actionneurs (8 ; 9) des soupapes d'admission (12) et d'échappement (13), $VVT_{int}$ et $VVT_{exh}$,

**6.** Procédé selon l'une des revendications 3 à 5, dans lequel on construit ledit modèle d'écoulement des gaz brûlés (MEGB) en réalisant les étapes suivantes :

a) on détermine des consignes de pression dans le répartiteur d'admission $P_{int}^{sp}$, de la fraction de gaz brûlés dans le répartiteur d'admission $X_{int}^{sp}$ et de position des moyens de distribution variable $VVT_{int}^{sp}$, $VVT_{exh}^{sp}$ souhaité en régime stabilisé en fonction de la consigne de couple du moteur $T_q^{sp}$ ;

b) on détermine une consigne de la fraction de gaz brûlés dans ledit cylindre $X_{cyl}^{sp}$ en appliquant ledit modèle de remplissage (MR) du cylindre à partir de la consigne de pression d'admission $P_{int}^{sp}$, de la consigne de la fraction de gaz brûlés dans le répartiteur d'admission (3) $X_{\text{int}}^{sp}$ et des consignes de position desdits actionneurs (8 ; 9) $VVT_{\text{int}}^{sp}$, $VVT_{exh}^{sp}$ du régime stabilisé ; et

c) on détermine les consignes de position desdits actionneurs (8; 9) $\overline{VVT}_{\text{int}}$ et $\overline{VVT}_{exh}$, en inversant ledit modèle de remplissage (IMR) du cylindre à partir de la fraction estimée de gaz brûlés dans le répartiteur d'admission (3) $X_{\text{int}}$, de la consigne de fraction de gaz brûlés dans le cylindre (2) $X_{cyl}^{sp}$, et de la pression estimée dans le répartiteur d'admission (3) $P_{\text{int}}$.

7. Procédé selon la revendication 6, dans lequel les consignes de pression dans le répartiteur d'admission $P_{\text{int}}^{sp}$, de la fraction de gaz brûlés dans le répartiteur d'admission $X_{\text{int}}^{sp}$ et de position des moyens de distribution variable $VVT_{\text{int}}^{sp}$, $VVT_{exh}^{sp}$ souhaité en régime stabilisé sont obtenues en réalisant les étapes suivantes :

i) on détermine une consigne de masse d'air dans ledit cylindre $m_{air}^{sp}$, une consigne de la fraction de gaz brûlés dans le répartiteur d'admission $X_{\text{int}}^{sp}$ et des consignes de position desdits actionneurs des soupapes d'admission et d'échappement $VVT_{\text{int}}^{sp}$, $VVT_{exh}^{sp}$ souhaité en régime stabilisé à partir de cartographies (MAP) dudit moteur, lesdites cartographies (MAP) étant dépendantes du régime du moteur $N_e$ et de la consigne de couple du moteur $T_q^{sp}$ ;

ii) on détermine une consigne de masse d'air aspirée dans ledit cylindre $m_{asp}^{sp}$, à partir de l'estimation de la fraction de gaz brûlés dans le répartiteur d'admission $X_{\text{int}}$ et de la masse d'air dans ledit cylindre $m_{air}^{sp}$ par une méthode d'estimation ou une méthode de mesure de la fraction de gaz brûlés dans ledit répartiteur d'admission (3) ;

iii) on détermine une consigne de pression d'admission $P_{\text{int}}^{sp}$ par ledit modèle de remplissage inversé (IMR) du cylindre (2) à partir de la consigne de masse d'air aspirée dans ledit cylindre $m_{asp}^{sp}$ et des positions estimées des actionneurs (8 ; 9) des soupapes d'admission (12) et d'échappement (13) $VVT_{\text{int}}$, $VVT_{exh}$ ;

8. Procédé selon l'une des revendications 6 ou 7, dans lequel la détermination des consignes de position desdits actionneurs (8 ; 9) $\overline{VVT}_{\text{int}}$ et $\overline{VVT}_{exh}$ sont obtenues en réalisant les étapes suivantes :

i) on fixe la position du second actionneur (9) $VVT_{exh}$ à sa valeur consigne $VVT_{exh}^{sp}$ du régime stabilisé ;
ii) on détermine la consigne de la position du premier actionneur (8) $\overline{VVT}_{\text{int}}$ à partir de la consigne de position du second actionneur (9) $VVT_{exh}$ en appliquant ledit modèle de remplissage inversé (IMR) du cylindre :

$$\overline{VVT}_{\text{int}} = \Phi\left( X_{cyl}^{sp}, P_{\text{int}}, X_{\text{int}}, VVT_{exh}^{sp} \right)$$

iii) on détermine la consigne de la position du second actionneur (9) $\overline{VVT}_{exh}$:

- si la consigne de la position du premier actionneur (8) $\overline{VVT}_{\text{int}}$ entre en saturation, on détermine la consigne de la position du second actionneur à partir de la position du premier actionneur (8) $\overline{VVT}_{\text{int}}$ en utilisant ledit modèle de remplissage inversé (IMR) du cylindre :

$$\overline{VVT}_{exh} = \Phi\left( X_{cyl}^{sp}, P_{\text{int}}, X_{\text{int}}, \overline{VVT}_{\text{int}} \right)$$

- sinon on détermine la position du second actionneur (8) en tant que sa valeur consigne $VVT_{exh}^{sp}$ du régime stabilisé : $\overline{VVT}_{exh} = VVT_{exh}^{sp}$

9. Moteur à combustion interne (1) comprenant au moins un cylindre (2), au moins une soupape (12) d'admission dans ledit cylindre et au moins une soupape (13) d'échappement de gaz brûlés dudit cylindre (2), ledit moteur à combustion (1) étant pourvu d'un circuit de recirculation des gaz brûlés et de moyens de distribution variable, lesdits moyens de distribution variable étant constitués par un premier actionneur (8) d'au moins une soupape d'admission (12) et par un second actionneur (9) d'au moins une soupape d'échappement (13), **caractérisé en ce que** ledit moteur comprend des moyens de commande dudit moteur, lesdits moyens de commande étant destinés à appliquer le procédé de commande selon l'une des revendications précédentes.

10. Véhicule, notamment automobile, comprenant un moteur à combustion interne selon la revendication 9.

**Patentansprüche**

1. Verfahren zur Steuerung eines Verbrennungsmotors (1), umfassend mindestens einen Zylinder (2), mindestens ein Einlassventil (12) in den Zylinder (2) und mindestens ein Auslassventil (13) der Verbrennungsgase aus dem Zylinder (2), wobei der Motor mit einer Rezirkulationsleitung der Abgase und Mitteln zur variablen Verteilung ausgestattet ist, wobei die Mittel zur variablen Verteilung von einem ersten Aktuator (8) des Einlassventils und von einem zweiten Aktuator (9) des Auslassventils gebildet sind, **dadurch gekennzeichnet, dass** es die folgenden Schritte umfasst:

- Erfassen eines Sollwerts des Drehmoments des Motors $T_q^{sp}$;
- Bestimmen eines Positionssollwerts des ersten Aktuators (8) $\overline{VVT}_{int}$ und eines Positionssollwerts des zweiten Aktuators (9) $\overline{VVT}_{exh}$ durch Anwenden eines Fließmodells der Verbrennungsgase (MEGB), das die Positionssollwerte der Aktuatoren mit dem Sollwert des Drehmoments des Motors $T_q^{sp}$ verbindet, wobei das Fließmodell der Verbrennungsgase (MEGB) ein Füllmodell des Zylinders (MR) umfasst und das Fließen der Verbrennungsgase in der externen (EGR) und internen (IGR) Rezirkulationsleitung der Abgase auf Grund der variablen Verteilung (VVT) charakterisiert; und
- Kontrollieren der Fraktion der Verbrennungsgase im Zylinder durch Anwenden der Positionssollwerte $\overline{VVT}_{int}$ und $\overline{VVT}_{exh}$ an den Mitteln zur variablen Verteilung (8; 9).

2. Verfahren nach Anspruch 1, bei dem das Füllmodell (MR) ein statisches Füllmodell des Zylinders ist, das die angesaugte Luftmasse und die Masse an Verbrennungsgasen im Zylinder in Abhängigkeit von der Geschwindigkeit $N_e$, der Temperatur $T_{int}$ und dem Druck $P_{int}$ im Einlassverteiler (3) und den Positionen der Aktuatoren (8; 9) $\overline{VVT}_{int}$ und $\overline{VVT}_{exh}$ schätzt.

3. Verfahren nach einem der Ansprüche 1 oder 2, bei dem das Fließmodell der Verbrennungsgase (MEGB) mit Hilfe von Kartographien (MAP) des Motors in Abhängigkeit vom Drehmomentsollwert $T_q^{sp}$ des Motors (1), die dem Füllmodell (MR) des Zylinders zugeordnet werden, erstellt wird.

4. Verfahren nach einem der vorhergehenden Ansprüche, bei dem das Füllmodell (MR) des Zylinders folgendermaßen geschrieben wird: $X_{cyl} = \phi(P_{int}, X_{int}, VVT_{int}, VVT_{exh})$
wobei

$X_{cyl}$: Massenfraktion von Verbrennungsgasen im Zylinder (2),
$P_{int}$: Druck in einem Einlassverteiler (3), der in den Motor stromaufwärts zum Zylinder (2) integriert ist, aus dem das Luft-Verbrennungsgas-Gemisch für den Einlass entnommen wird,
$X_{int}$: Massenfraktion von Verbrennungsgasen in dem Einlassverteiler (3),
$VVT_{int}$: Position des ersten Aktuators (8), und
$VVT_{exh}$: Position des zweiten Aktuators (9)

**5.** Verfahren nach Anspruch 4, bei dem das Füllmodell (MR) aus folgenden Gleichungen erhalten wird:

$$\begin{cases} m_{asp}^{int} = f(P_{int}, VVT_{int}, VVT_{exh}) \\ m_{asp}^{exh} = g(P_{int}, VVT_{int}, VVT_{exh}) \end{cases}$$

wobei:

$$\begin{cases} f(P_{int}, VVT_{int}, VVT_{exh}) = \alpha_1(P_{int}, N_e)\frac{P_{int}}{RT_{int}} V_{ivc}(VVT_{int}) - \alpha_2(P_{int}, N_e)\frac{OF(VVT_{int}, VVT_{exh})}{N_e} - \alpha_3(P_{int}, N_e)V_{evc}(VVT_{exh}) \\ g(P_{int}, VVT_{int}, VVT_{exh}) = \alpha_2(P_{int}, N_e)\frac{OF(VVT_{int}, VVT_{exh})}{N_e} + \alpha_3(P_{int}, N_e)V_{evc}(VVT_{exh}) \end{cases}$$

und der Gleichung

$$X_{cyl} = \frac{X_{int}\, m_{asp}^{int} + m_{asp}^{exp}}{m_{asp}^{int} + m_{asp}^{exh}}$$

wobei:

$X_{cyl}$: Massenfraktion von Verbrennungsgasen im Zylinder (2),
$P_{int}$: Druck in dem Einlassverteiler (3),
$X_{int}$: Massenfraktion von Verbrennungsgasen in dem Einlassverteiler (3),
$m_{asp}^{int}$ : in die Zylinder durch die Einlassventile (12) angesaugte Masse,
$m_{asp}^{exh}$ : von der IGR kommende angesaugte Masse,
$\alpha_1$, $\alpha_2$, *und* $\alpha_3$: bekannte Befestigungsparameter des Füllmodells, abhängig von $P_{int}$ und $N_e$,
$V_{ivc}$: Volumen des Zylinders bei Verschluss Einlassventil (ivc), abhängig von der Position des Aktuators (8) mindestens eines Einlassventils $VVT_{int}$,
$V_{evc}$: Volumen des Zylinders bei Verschluss Auslassventil (evc), abhängig von der Position des zweiten Aktuators $VVT_{exh}$,
$OF$: Kreuzungsfaktor, abhängig von den Positionen der Aktuatoren (8; 9) der Einlass- (12) und Auslassventile (13), $VVT_{int}$ und $VVT_{exh}$

**6.** Verfahren nach einem der Ansprüche 3 bis 5, bei dem das Fließmodell der Verbrennungsgase (MEGB) erstellt wird, wobei die folgenden Schritte durchgeführt werden:

a) Bestimmen der Drucksollwerte im Einlassverteiler $p_{int}^{sp}$, der Fraktion von Verbrennungsgasen im Einlassverteiler $X_{int}^{sp}$ und der Position der Mittel zur variablen Verteilung $VVT_{int}^{sp}$, $VVT_{exh}^{int}$, wie im stabilisierten Betrieb gewünscht, in Abhängigkeit vom Drehmomentsollwert des Motors $T_q^{sp}$;

b) Bestimmen eines Sollwerts der Fraktion von Verbrennungsgasen im Zylinder $X_{cyl}^{sp}$ unter Anwendung des Füllmodells (MR) des Zylinders auf Basis des Einlassdrucksollwerts $P_{int}^{sp}$, des Sollwerts der Fraktion von Verbrennungsgasen in dem Einlassverteiler (3) $X_{int}^{sp}$ und der Positionssollwerte der Aktuatoren (8; 9) $VVT_{int}^{sp}$, $VVT_{exh}^{sp}$ der stabilisierten Geschwindigkeit; und

c) Bestimmen der Positionssollwerte der Aktuatoren (8; 9) $\overline{VVT}_{int}$, $\overline{VVT}_{exh}$, wobei das Füllmodell (IMR) des Zylinders auf Basis der geschätzten Fraktion von Verbrennungsgasen im Einlassverteiler (3) $X_{int}$, des Fraktionssollwerts von Verbrennungsgasen im Zylinder (2) $X_{cyl}^{sp}$ und des geschätzten Drucks in dem Einlassverteiler (3) $P_{int}$.

7. Verfahren nach Anspruch 6, bei dem die Sollwerte des Drucks in dem Einlassverteiler $P_{int}^{sp}$, der Fraktion von Verbrennungsgasen im Einlassverteiler $X_{int}^{sp}$ und der Position der Mittel zur variablen Verteilung $VVT_{int}^{sp}$, $VVT_{exh}^{sp}$, wie bei stabiler Geschwindigkeit gewünscht, erhalten werden, wobei die folgenden Schritte durchgeführt werden:

i) Bestimmen eines Luftmassensollwerts in dem Zylinder $m_{air}^{sp}$, eines Sollwerts der Fraktion von Verbrennungsgasen in dem Einlassverteiler $X_{int}^{sp}$ und der Positionssollwerte der Aktuatoren der Einlass- und Auslassventile $VVT_{int}^{sp}$, $VVT_{exh}^{sp}$, wie bei stabilisierter Geschwindigkeit gewünscht, auf Basis von Kartographien (MAP) des Motors, wobei die Kartographien (MAP) von der Geschwindigkeit des Motors $N_e$ und dem Drehmomentsollwert des Motors $T_q^{sp}$ des Motors abhängen;

ii) Bestimmen eines Sollwerts von angesaugter Luftmasse in den Zylinder $m_{asp}^{sp}$ auf Basis der Schätzung der Fraktion von Verbrennungsgasen in dem Einlassverteiler $X_{int}$ und der Luftmasse in dem Zylinder $m_{air}^{sp}$ durch eine Schätzmethode oder eine Messmethode der Fraktion von Verbrennungsgasen in dem Einlassverteiler (3);

iii) Bestimmen eines Einlassdrucksollwerts $P_{int}^{sp}$ durch das umgekehrte Füllmodell (IMR) des Zylinders (2) auf Basis des Sollwerts der in den Zylinder $m_{asp}^{sp}$ angesaugten Luftmasse und der geschätzten Positionen der Aktuatoren (8; 9) der Einlass-(12) und Auslassventile (13) $VVT_{int}$, $VVT_{exh}$;

8. Verfahren nach einem der Ansprüche 6 oder 7, bei dem die Bestimmung der Positionssollwerte der Aktuatoren (8; 9) $\overline{VVT}_{int}$, $\overline{VVT}_{exh}$, erhalten werden, wobei die folgenden Schritte durchgeführt werden:

i) Festlegen der Position des zweiten Aktuators (9) $VVT_{exh}$ auf seinen Sollwert $VVT_{exh}^{sp}$ der stabilisierten Geschwindigkeit;

ii) Bestimmen des Sollwerts der Position des ersten Aktuators (8) $\overline{VVT}_{int}$ auf Basis des Positionssollwerts des zweiten Aktuators (9) $VVT_{exh}$ durch Anwendung des umgekehrten Füllmodells (IMR) des Zylinders:

$$\overline{VVT}_{int} = \phi\,(X_{cyl}^{sp}, P_{int}, X_{int}, VVT_{exh}^{sp})$$

iii) Bestimmen des Sollwerts der Position des zweiten Aktuators (9) $\overline{VVT}_{exh}$:

- wenn der Positionssollwert des ersten Aktuators (8) $\overline{VVT}_{int}$ zur Sättigung gelangt, Bestimmen des Sollwerts der Position des zweiten Aktuators auf Basis der Position des ersten Aktuators (8) $\overline{VVT}_{int}$ unter Verwendung des umgekehrten Füllmodells (IMR) des Zylinders:

$$\overline{VVT}_{exh} = \phi\left(X_{cyl}^{sp}, P_{int}, X_{int}, \overline{VVT}_{int}\right)$$

- andernfalls Bestimmen der Position des zweiten Aktuators (8) als seinen Sollwert $VVT_{exh}^{sp}$ der stabilisierten Geschwindigkeit: $\overline{VVT}_{exh} = VVT_{exh}^{sp}$

9. Verbrennungsmotor (1), umfassend mindestens einen Zylinder (2), mindestens ein Einlassventil (12) in den Zylinder und mindestens ein Auslassventil (13) von Verbrennungsgasen aus dem Zylinder (2), wobei der Verbrennungsmotor (1) mit einer Rezirkulationsleitung der Verbrennungsgase und Mitteln zur variablen Verteilung versehen ist, wobei die Mittel zur variablen Verteilung von einem ersten Aktuator (8) mindestens eines Einlassventils (12) und von einem zweiten Aktuator (9) mindestens eines Auslassventils (13) gebildet sind, **dadurch gekennzeichnet, dass** der Motor Mittel zur Steuerung des Motors umfasst, wobei die Steuerungsmittel dazu bestimmt sind, das Steuerungsverfahren nach einem der vorhergehenden Ansprüche anzuwenden.

10. Fahrzeug, insbesondere Kraftfahrzeug, umfassend einen Verbrennungsmotor nach Anspruch 9.

## Claims

1. Method for controlling an internal combustion engine (1) comprising at least one cylinder (2), at least one intake valve (12) for admitting into the said cylinder (2) and at least one exhaust valve (13) for exhausting the burnt gases from the said cylinder (2), the said engine being equipped with an exhaust gas recirculation circuit and with variable valve timing means, the said variable valve timing means consisting of a first actuator (8) actuating the said intake valve and of a second actuator (9) actuating the said exhaust valve, **characterized in that** it comprises the following steps:

   - acquiring a setpoint $T_q^{sp}$ for the torque of the said engine;
   - determining a setpoint $\overline{VVT}_{int}$ for the position of the said first actuator (8) and a setpoint $\overline{VVT}_{exh}$ for the position of the said second actuator (9) by applying a burnt gas flow model (MEGB) which connects the setpoints for the positions of the said actuators to the setpoint $T_q^{sp}$ for the torque of the engine, the said burnt gas flow model (MEGB) comprising a cylinder filling model (MR) and characterizing the flow of the burnt gases in the said external exhaust gas recirculation (EGR) and internal exhaust gas recirculation (IGR) circuit as a result of the variable valve timing (VVT); and
   - controlling the fraction of burnt gases in the said cylinder by applying the position setpoints $\overline{VVT}_{int}$ and $\overline{VVT}_{exh}$ to the said variable valve timing means (8; 9).

2. Method according to Claim 1, in which the said filling model (MR) is a static model of the filling of the cylinder that estimates the aspirated mass of air and the mass of gas burnt in the cylinder as a function of the engine speed $N_e$, the temperature $T_{int}$ and the pressure $P_{int}$ in the intake distribution manifold (3) and of the positions $VVT_{int}$ and $VVT_{exh}$ of the actuators (8; 9).

3. Method according to one of Claims 1 and 2, in which the burnt gas flow model (MEGB) is constructed using engine maps (MAP) as a function of the setpoint $T_q^{sp}$ for the torque of the said engine (1) which maps are associated with the said filling model (MR) for the cylinder.

4. Method according to one of the preceding claims, in which the said filling model (MR) for the said cylinder can be written: $X_{cyl} = \phi(P_{int}, X_{int}, VVT_{int}, VVT_{exh})$ where

   $X_{cyl}$: Mass fraction of burnt gases in the cylinder (2),
   $P_{int}$: Pressure in an intake distribution manifold (3) incorporated into the said engine upstream of the said cylinder (2), from which manifold the mixture of air and burnt gases for the intake is drawn.
   $X_{int}$: Mass fraction of burnt gases in the said intake distribution manifold (3),
   $VVT_{int}$: Position of the first actuator (8), and
   $VVT_{exh}$: Position of the second actuator (9).

**5.** Method according to Claim 4, in which the filling model (MR) is obtained from the equations:

$$\begin{cases} m_{asp}^{int} = f\left(P_{int}, VVT_{int}, VVT_{exh}\right) \\ m_{asp}^{exh} = g\left(P_{int}, VVT_{int}, VVT_{exh}\right) \end{cases}$$

in which:

$$\begin{cases} f(P_{int}, VVT_{int}, VVT_{exh}) = \alpha_1(P_{int}, N_e)\dfrac{P_{int}}{RT_{int}}V_{ivc}(VVT_{int}) - \alpha_2(P_{int}, N_e)\dfrac{OF(VVT_{int}, VVT_{exh})}{N_e} - \alpha_3(P_{int}, N_e)V_{evc}(VVT_{exh}) \\ g(P_{int}, VVT_{int}, VVT_{exh}) = \alpha_2(P_{int}, N_e)\dfrac{OF(VVT_{int}, VVT_{exh})}{N_e} + \alpha_3(P_{int}, N_e)V_{evc}(VVT_{exh}) \end{cases}$$

and the equation

$$X_{cyl} = \frac{X_{int} m_{asp}^{int} + m_{asp}^{exh}}{m_{asp}^{int} + m_{asp}^{exh}}$$

where

$X_{cyl}$: Mass fraction of burnt gases in the cylinder (2),
$P_{int}$: Pressure in the intake distribution manifold (3),
$X_{int}$: Mass fraction of burnt gases in the intake distribution manifold (3),
$m_{asp}^{int}$: Mass aspirated into the cylinders through the intake valves (12),
$m_{asp}^{exh}$: Aspirated mass coming from the IGR,
$\alpha_1$, $\alpha_2$, $\alpha_3$: Known filling-model calibration parameters which are a function of $P_{int}$ and $N_e$,
$V_{ivc}$: volume of the cylinder at ivc (intake valve closure), which is a function of the position $VVT_{int}$ of the actuator (8) of at least one intake valve,
$V_{evc}$: volume of the cylinder at evc (exhaust valve closure), which is a function of the position $VVT_{exh}$ of the second actuator (9),
$OF$: Overlap factor, which is a function of the positions $VVT_{int}$ and $VVT_{exh}$ of the actuators (8; 9) of the intake (12) and exhaust (13) valves.

**6.** Method according to one of Claims 3 to 5, in which the said burnt gas flow model (MEGB) is constructed by performing the following steps:

a) determining setpoints $P_{int}^{sp}$ for the pressure in the intake distribution manifold, $X_{int}^{sp}$ for the fraction of burnt gases in the intake distribution manifold and $VVT_{int}^{sp}$, $VVT_{exh}^{sp}$ for the position of the variable valve timing means desired under steady state speed as a function of the engine torque setpoint $T_q^{sp}$;

b) determining a setpoint $X_{cyl}^{sp}$ for the fraction of burnt gases in the said cylinder, by applying the said cylinder filing model (MR) from the setpoint $P_{int}^{sp}$ for intake pressure, the setpoint $X_{int}^{sp}$ for the fraction of burnt gases in the intake distribution manifold (3) and the setpoints $VVT_{int}^{sp}$, $VVT_{exh}^{sp}$ for the position of the said actuators (8; 9) at the steady-state speed; and

c) determining the setpoints $\overline{VVT}_{int}$ and $\overline{VVT}_{exh}$ for the position of the said actuators (8; 9) by inverting the said cylinder filling model (IMR) from the estimated fraction $X_{int}$ of burnt gases in the intake distribution manifold (3), the setpoint $X_{cyl}^{sp}$ for the fraction of burnt gases in the cylinder (2), and the estimated pressure $P_{int}$ in the intake distribution manifold (3).

7. Method according to Claim 6, in which the setpoints $P_{int}^{sp}$ for the pressure in the intake distribution manifold, $X_{int}^{sp}$ for the fraction of burnt gases in the intake distribution manifold and $VVT_{int}^{sp}$, $VVT_{exh}^{sp}$ for the position of the variable valve timing means desired in steady state speed are obtained performing the following steps:

i) determining a setpoint $m_{air}^{sp}$ for the mass of air in the said cylinder, a setpoint $X_{int}^{sp}$ for the fraction of burnt gases in the intake distribution manifold, and setpoints $VVT_{int}^{sp}$, $VVT_{exh}^{sp}$ for the position of the said actuators of the intake and exhaust valves desired under steady state speed from maps (MAP) of the said engine, the said maps (MAP) being dependent on the engine speed $N_e$ and on the engine torque setpoint $T_q^{sp}$;

ii) determining a setpoint $m_{asp}^{sp}$ for the mass of air aspirated into the said cylinder, from the estimate of the fraction of burnt gases $X_{int}$ in the intake distribution manifold and $m_{air}^{sp}$ for the mass of air in the said cylinder, using a method for estimating or a method for measuring the fraction of burnt gases in the said intake distribution manifold (3);

iii) determining a setpoint $P_{int}^{sp}$ for the intake pressure using the said inverse filling model (IMR) for the cylinder (2) from the setpoint $m_{asp}^{sp}$ for the mass of air aspirated into the said cylinder and for the estimated positions $VVT_{int}$, $VVT_{exh}$ of the actuator (8; 9) of the intake (12) and exhaust (13) valves.

8. Method according to one of Claims 6 and 7, in which the setpoints $\overline{VVT}_{int}$ and $\overline{VVT}_{exh}$ for the position of the said actuators (8; 9) are obtained by performing the following steps:

i) fixing the position $VVT_{exh}$ of the second actuator (9) at its setpoint value $VVT_{exh}^{sp}$ for the steady-state speed;

ii) determining the setpoint for the position $\overline{VVT}_{int}$ of the first actuator (8) from the setpoint for the position $\overline{VVT}_{exh}$ the second actuator (9) by applying the said inverse filling model (IMR) for the cylinder:

$$\overline{VVT}_{int} = \Phi\left(X_{cyl}^{sp}, P_{int}, X_{int}, VVT_{exh}^{sp}\right)$$

iii) determining the setpoint $\overline{VVT}_{exh}$ for the position of the second actuator (9):

- if the setpoint $\overline{VVT}_{int}$ for the position of the first actuator (8) becomes saturated, then the setpoint for the position of the second actuator is determined from the position $\overline{VVT}_{int}$ of the first actuator (8) using the said inverse filling model (IMR) for the cylinder:

$$\overline{VVT}_{exh} = \Phi\left(X_{cyl}^{sp}, P_{int}, X_{int}, \overline{VVT}_{int}\right)$$

- otherwise, the position of the second actuator (8) is determined as being the setpoint value $VVT_{exh}^{sp}$ for the steady-state speed: $\overline{VVT}_{exh} = VVT_{exh}^{sp}$

9. Internal combustion engine (1) comprising at least one cylinder (2), at least one intake valve (12) for admission into the said cylinder and at least one exhaust valve (13) for exhausting burnt gases from the said cylinder (2), the said combustion engine (1) being provided with an exhaust gas recirculation circuit and with variable valve timing means, the said variable valve timing means consisting of a first actuator (8) of at least one intake valve (12) and of a second actuator (9) actuating at least one exhaust valve (13), **characterized in that** the said engine comprises means for controlling the said engine, the said control means being intended to apply the control method according to one of the preceding claims.

10. Vehicle, notably a motor vehicle, comprising an internal combustion engine according to Claim 9.

**Figure 1**

**Figure 2**

EP 2 594 768 B1

**Figure 3**
**ART ANTERIEUR**

**Figure 4**

MEGB

23

**Figure 5**

**Figure 6**

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2211043 A

**Littérature non-brevet citée dans la description**

- **T.LEROY ; J.CHAUVIN ; F.LE BERR ; A.DUPARCHY ; G.ALIX.** Modeling Fresh Air Charge and Residual Gas Fraction on a Dual Independant Variable Valve Timing SI Engine. *Proc. of SAE Conference, 2008-01-0983,* 2008